Europäisches Patentamt

European Patent Office

Office européen des brevets

(11) Veröffentlichungsnummer: **0 175 050**
**A2**

## (12) EUROPÄISCHE PATENTANMELDUNG

(21) Anmeldenummer: 85105348.8

(51) Int. Cl.⁴: **G 11 B 5/127**

(22) Anmeldetag: 02.05.85

(30) Priorität: 14.09.84 DE 3433750

(43) Veröffentlichungstag der Anmeldung: 26.03.86
Patentblatt 86/13

(84) Benannte Vertragsstaaten: AT DE FR GB IT

(71) Anmelder: **GRUNDIG E.M.V. Elektro-Mechanische Versuchsanstalt Max Grundig holländ. Stiftung & Co. KG., Kurgartenstrasse 37, D-8510 Fürth (DE)**

(72) Erfinder: **Eckstein, Karlheinz, Am Haselbuck 11,
D-8510 Fürth/Bay (DE)**
Erfinder: **Kotter, Karl-Heinz, Dipl.-Ing.
Dipl.-Wirtsch.-Ing., Ackerstrasse 10,
D-8502 Zirndorf-Weiherhof (DE)**

(54) Magnetkopf und Verfahren zu seiner Herstellung.

(57) Es wird ein Magnetkopf und ein Verfahren zu seiner Herstellung beschrieben, bei dem Teilflächen zweier weichmagnetischer Kernhälften aus amorphem Metall und ein weichmagnetischer Kernträger mit einer Glaseinlage im Spaltbereich Bandkontakt haben, und bei dem ein Verbindungskörper (6) die Kernhälften (2a, 2b) mit dem Kernträger, der aus unterschiedlichen Kernträgerhälften (4, 5) besteht, vorspannungsfrei verbindet, wobei der Verbindungskörper mit dem Band nicht in Berührung gelangt.

-5- 1

# MAGNETKOPF UND VERFAHREN ZU SEINER HERSTELLUNG

## BESCHREIBUNG

Die Erfindung betrifft einen Magnetkopf, bei dem Teilflächen zweier weichmagnetischer Kernhälften aus
amorphem Metall, ein unmagnetischer Arbeitsspalt und
ein Kernträger im Spaltbereich Bandkontakt haben, bei
dem diese Teilflächen zumindest einen Teil der Bandkontaktfläche des Magnetbandes bilden, und bei dem
Spulenwindungen um wenigstens eine Kernhälfte gewikkelt sind.

Es ist bekannt, daß bei Videomagnetbandgeräten der
Unterhaltungselektronik Magnetköpfe mit kleinen
Spurbreiten und extrem kleinen Spaltbreiten für das
Aufzeichnen und Abtasten des Bildsignals in großer
Stückzahl hergestellt werden. Die Schwierigkeiten bei

-6-

der wirtschaftlichen Herstellung eines derart kleinen Magnetkopfes in großen Stückzahlen liegt darin, daß der mit dem Arbeitsspalt versehene besonders dünne Magnetkern eine ausreichende mechanische Stabilität und eine hohe Verschleißfestigkeit aufweist.

Aus der DE-OS 26 42 643 ist ein Magnetkopf für schmale Aufzeichnungsspuren bekannt, bei dem in einer Art Schichtbauweise der dünne Magnetkern einseitig mit einem nichtmagnetischen Frontteil und einem magnetischen Rückteil flächig verbunden und somit verstärkt ist.

Nachteilig ist hierbei, daß der Magnetkopf nicht in einheitlich zu bearbeitenden Blockhälften gefertigt werden kann und als Einzelkopf keinen symmetrischen Aufbau aufweist.

Die Aufgabe der Erfindung besteht darin, einen symmetrisch aus zwei Blockhälften aufgebauten Magnetkopf zu schaffen, dessen einzelne Blockhälften durch einen Verbindungskörper zu einer besonders kompakten Einheit verbunden sind und der Verbindungskörper nicht in Bandkontakt gelangt.

Diese Aufgabe wird erfindungsgemäß durch die im kennzeichnenden Teil des Anspruchs 1 angegebenen Merkmale gelöst.

Vorteilhafte Ausgestaltungen des erfindungsgemäßen Magnetkopfes ergeben sich aus den Unteransprüchen.

Die Erfindung wird nachfolgend unter Bezugnahme auf die Zeichnungsfiguren näher erläutert.

Fig. 1    ist eine perspektivische Darstellung eines erfindungsgemäßen Magnetkopfes,

Fig. 2    ist eine schematische Draufsicht auf den Kopfspiegel eines Magnetkopfes nach Figur 1,

Fig. 3    ist eine perspektivische Darstellung zweier Blockhälften zur Fertigung eines Magnetkopfes nach Figur 1 vor dem Verbinden und

Fig. 4    ist eine schematische kopfspiegelseitige Draufsicht auf die verbundenen Blockhälften nach Figur 3 mit einem herausgetrennten Einzel-Magnetkopf.

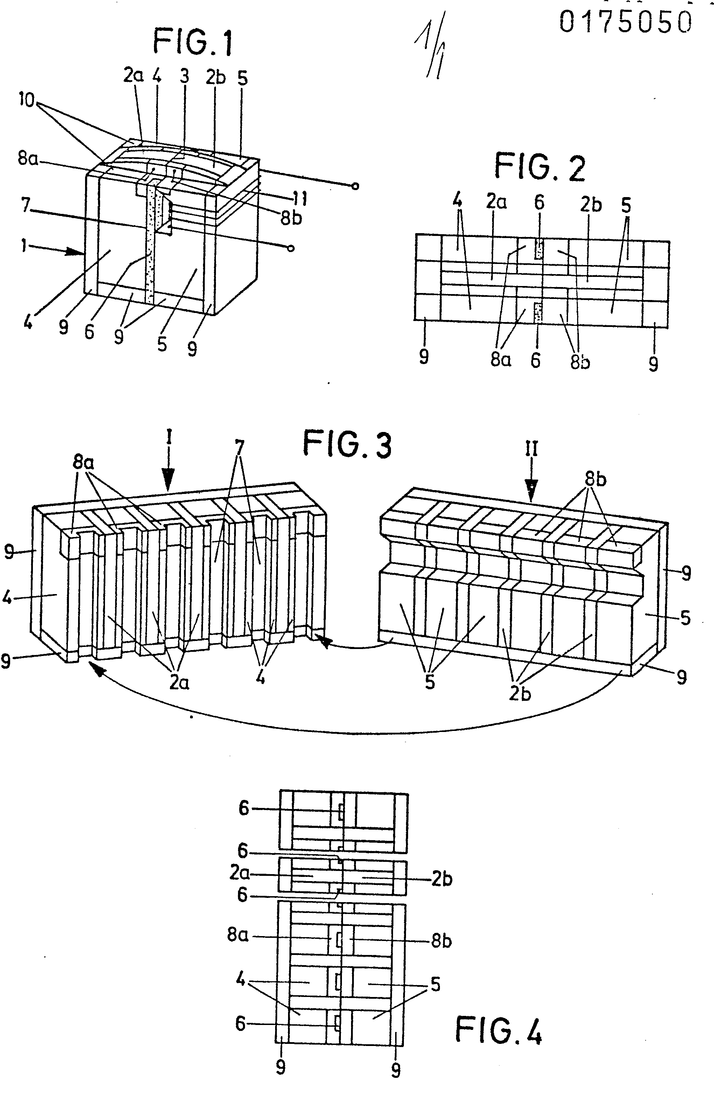

Die Figur 1 zeigt einen Magnetkopf 1 nach dem erfindungsgemäßen Aufbau. Der Magnetkopf besteht im wesentlichen aus den beiden Kernhälften 2a und 2b aus amorphem weichmagnetischem Metall, die durch einen unmagnetischen Arbeitsspalt 3 getrennt sind. Die Kernhälften sind beidseitig symmetrisch durch sie einschließende Kernträgerhälften 4, 5 mittels Verbindungsschichten zu einer Einheit zusammengefaßt. Das endgültige und dauerhafte Zusammenhalten sämtlicher Kopfteile übernimmt ein Verbindungskörper 6. Der Verbindungskörper 6 verbindet auf beiden Außenseiten, jedoch außerhalb des Bandkontaktbereiches, die Kernträgerhälften 4 und 5. Der Verbindungskörper 6 liegt in einem nutartigen Zwischenraum 7, der zwischen den Kernträgerhälften 4 und 5 gebildet ist. Die Kernhälften 2a und 2b bestehen aus weichmagnetischem Metall, insbesondere auf Co-Basis. Werkstoffe dieser Art zeichnen sich durch für den Magnetkopf vorteilhafte magnetische Werte und einer hohen mechanischen Verschleißfestigkeit aus. Amorphes Metall wird zur Magnetkopffertigung in Folienform verwendet, wobei die Foliendicke meist bereits der Dicke der Kernhälften entspricht. Eine Nacharbeit ist daher nicht erforderlich. Die Kernträgerhälften 4 und 5 bestehen für den geschilderten Kopfaufbau aus weichmagnetischem Ferrit. Die Kernträgerhälften weisen beidseitig gegenüber dem Arbeitsspalt je eine Glaseinlage 8a und 8b auf. Die Kernhälften und Kernträgerhälften sind an beiden schmalen Seitenflächen und an der Stirnfläche gegenüber der Bandkontaktfläche von schmalen Keramikplättchen 9 eingefaßt und über eine Verbindungsschicht verbunden. Die Anordnung der Keramikplättchen ist jedoch in der bereits bei der Herstellung der für den Arbeitsprozeß vorausgehenden bekannten Blockhälftenfertigung I, II berücksichtigt. Zur Begrenzung der Bandlauffläche weist der angeschliffene Kopfspiegel beidseitig eine eingeschliffene Stufe 10 auf. Nach Abschluß aller Schleif- und Läppvorgänge ist der vorgefertigte Einzelkopf mit Spulenwindungen 11 über mindestens eine Kopfhälfte versehen.

Die Figur 2 zeigt die Draufsicht auf den Kopfspiegel des Magnetkopfes 1. Der Verbindungskörper 6 ragt beidseitig nicht ganz bis an die Lauffläche des Magnetbandes und kommt daher mit dieser nicht in Berührung.

Aus der Fig. 3 ist zu erkennen, wie die beiden Blockhälften I und II zuerst durch Aneinanderstapeln von vorgefertigten Kernträgerhälften mit Glaseinlage an die Kernhälften und anschließendem Anlegen der Keramikplättchen als identisch aussehende Blöcke oder aus einer mittig trennbaren Blockeinheit entstehen. Die Verbindungsflächen der einzelnen Teile weisen eine Glas- oder Klebeschicht als Verbindungsschicht auf, über die durch Einwirkung von Druck und Temperatur auf den Teilestapel eine Blockeinheit oder ein Halbblock zusammengelötet ist. Die als Spaltfläche vorgesehene Seite eines Halbblocks wird auf optimale Oberflächenglätte geschliffen, geläppt und poliert. Erst dann ist in jede zweite Blockhälfte eine Schleifnut als Freiraum für die Spulenwindungen eingebracht. Gemäß eines erfindungswesentlichen Verfahrensschrittes ist derjenige Block, der keinen Freiraum für die Spulenwindungen aufweist, mit einem nutartigen Zwischenraum 7 versehen, wobei dieser Zwischenraum durch Einschleifen einer Nut in jede Kernträgerhälfte durchgehend über die Glaseinlage und das Keramikplättchen entstanden ist. Denkbar ist auch, daß in beide Kernträgerhälften ein nutartiger Zwischenraum eingeschliffen ist.

In einem weiteren Verfahrensschritt ist das unmagnetische Arbeitsspaltmaterial in bekannter Weise, beispielsweise durch Aufdampfen, aufgebracht. Zwei unterschiedliche Halbblöcke sind sodann in einer Vorrichtung entsprechend den in der Zeichnung angegebenen Pfeilrichtungen mit den bearbeiteten Flächen gegeneinandergedrückt, und in diesem Zustand ist der nutartige Zwischenraum 7 zwischen den beiden Blöcken mit dünnflüssigem Siliconharz bzw. einem Siliconharz-Mischprodukt gefüllt und durch Erhitzen zu einem Verbindungskörper für beide Blockhälften ausgehärtet. Die Aushärtungstemperatur ist dabei so gewählt, daß sie unter dem Erweichungspunkt der Glaszwischenschichten liegt.

0175050

Die Trennung eines verbundenen Blockes zu einzelnen
Magnetköpfen ist aus der Figur 4 ersichtlich.

1

MAGNETKOPF UND VERFAHREN ZU SEINER HERSTELLUNG

PATENTANSPRÜCHE

1. Magnetkopf, bei dem Teilflächen zweier weichmagnetischer Kernhälften aus amorphem Metall, ein unmagnetischer Arbeitsspalt und ein Kernträger im Spaltbereich Bandkontakt haben, bei dem diese Teilflächen zumindest einen Teil der Bandkontaktfläche des Magnetkopfes bilden, und bei dem Spulenwindungen um wenigstens eine Kernhälfte gewickelt sind, d a d u r c h   g e k e n n z e i c h n e t ,   daß die Kernhälften (2a, 2b) und die sie beidseitig einschließenden Kernträgerhälften (4, 5) eine gemeinsame den Arbeitsspalt begrenzende Fläche aufweisen, daß auf beiden Außenseiten außerhalb des Bandkontaktbereiches längs über die gesamte Verbindungslinie zwischen den Kernträgerhälften ein nutartiger Zwischenraum (7) gebildet ist, den ein Verbindungskörper (6) ausfüllt und alle Kopfteile vorspannungsfrei verbindet.

- 2 -

2. Magnetkopf nach Anspruch 1, d a d u r c h g e k e n n z e i c h n e t , daß die Bandkontaktfläche derart ausgebildet ist, daß sich für den Verbindungskörper kein Bandkontakt ergibt.

3. Magnetkopf nach den Ansprüchen 1 und 2, d a d u r c h g e k e n n z e i c h n e t , daß die Kernträgerhälften (4, 5) aus weichmagnetischem Ferrit bestehen.

4. Magnetkopf nach den Ansprüchen 1 und 3, d a d u r c h g e k e n n z e i c h n e t , daß die Kernträgerhälften (4, 5) beidseitig gegenüber dem Arbeitsspalt (3) eine Glaseinlage (8a, 8b) aufweisen.

5. Magnetkopf nach Anspruch 1 bis 4, d a - d u r c h g e k e n n z e i c h n e t , daß die Kernhälften (2a, 2b) und Kernträgerhälften (4, 5) durch Verbindungsschichten, vorzugsweise aus einem aushärtbaren Kleber oder niederschmelzendem Glas (Erweichungstemperatur $< 400\ ^{\circ}C$), zusammengehalten werden.

6. Magnetkopf nach den Ansprüchen 1 bis 5, d a d u r c h g e k e n n z e i c h n e t , daß die schmale Stirnfläche gegenüber der Bandkontaktfläche und die beiden schmalen Seitenflächen von Keramikplättchen (9) eingefaßt sind.

- 3 -

7. Magnetkopf nach den Ansprüchen 1 bis 6, d a d u r c h   g e k e n n z e i c h n e t ,   daß die Keramikplättchen (9) mit den Kernträgerhälften (4, 5) durch Verbindungsschichten, vorzugsweise aus einem aushärtbaren Kleber oder aus niederschmelzendem Glas, zusammengehalten sind.

8. Magnetkopf nach den Ansprüchen 1 bis 7, d a d u r c h   g e k e n n z e i c h n e t ,   daß der Erweichungspunkt der Verbindungsschichten unter dem Kristallisationspunkt der Kernhälften (2a, 2b) und über der Aushärtungstemperatur des Verbindungskörpers (6) liegt.

9. Magnetkopf nach den Ansprüchen 1 bis 8, d a d u r c h   g e k e n n z e i c h n e t ,   daß der nutenartige Zwischenraum (7), der von einem Verbindungskörper (6) ausgefüllt ist, auf beiden Außenseiten entlang der Verbindungslinie zwischen den Kernträgerhälften (4, 5) durch Schleifen oder Läppen, vorzugsweise an nur einer Kernträgerhälfte (4) pro Seite, eingebracht ist.

10. Verfahren zur Herstellung eines Magnetkopfes nach den Ansprüchen 1 bis 9, d a d u r c h   g e k e n n z e i c h n e t ,   daß in den Magnetkopf, der bekannterweise durch scheibenweises Trennen zweier verbundener Blockhälften (I, II) entsteht,

- 4 -

der nutenartige Zwischenraum (7) in den Kernträgerhälften (4, 5) bereits in den Blockhälften (I, II),
vorzugsweise in nur eine Blockhälfte (II), mittig
zur Trennungsebene zweier kompletter Magnetkopfteile
eingebracht ist.

FIG.1

FIG. 2

FIG.3

FIG.4

0175050